(19) Europäisches Patentamt
European Patent Office
Office européen des brevets

(11) **EP 2 834 133 B1**

(12) **EUROPÄISCHE PATENTSCHRIFT**

(45) Veröffentlichungstag und Bekanntmachung des Hinweises auf die Patenterteilung:
**22.06.2016  Patentblatt 2016/25**

(21) Anmeldenummer: **13703087.0**

(22) Anmeldetag: **08.02.2013**

(51) Int Cl.:
**B62D 6/02** *(2006.01)*    **B62D 15/00** *(2006.01)*
**B60W 10/00** *(2006.01)*

(86) Internationale Anmeldenummer:
**PCT/EP2013/052531**

(87) Internationale Veröffentlichungsnummer:
**WO 2013/149746 (10.10.2013 Gazette 2013/41)**

(54) **VERFAHREN ZUR LENKMOMENTREDUZIERUNG BEI KURVENFAHRTEN EINES ZWEIRADS**

METHOD FOR REDUCING THE STEERING TORQUE OF A TWO-WHEELED VEHICLE DRIVING ON CURVE

MÉTHODE DE RÉDUCTION DU COUPLE DE DIRECTION D'UN VÉHICULE PENDANT UNE COURBE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.04.2012   DE 102012205520**

(43) Veröffentlichungstag der Anmeldung:
**11.02.2015   Patentblatt 2015/07**

(73) Patentinhaber: **Robert Bosch GmbH
70442 Stuttgart (DE)**

(72) Erfinder:
• **HAAS, Hardy
71254 Ditzingen-Schoeckingen (DE)**
• **LEMEJDA, Markus
71642 Ludwigsburg (DE)**
• **WAHL, Anja
71706 Markgroeningen (DE)**

(56) Entgegenhaltungen:
**EP-A1- 2 130 754     DE-A1-102010 003 951
US-B1- 7 143 853**

**Beschreibung**

Die Erfindung bezieht sich auf ein Verfahren zur Lenkmomentreduzierung bei Kurvenfahrten eines Zweirads.

Stand der Technik

Wenn ein motorisiertes Zweirad bei einer Kurvenfahrt am Vorderrad gebremst wird, resultiert daraus ein das Motorrad aufrichtendes Lenkstörmoment um die Lenkachse des Zweirads, wodurch das Zweirad auf einen größeren Kurvenradius gezwungen wird. Derartigen Lenkstörmomenten muss der Fahrer entgegenwirken, andernfalls besteht die Gefahr, dass das Zweirad die vorgesehene Fahrspur verlässt und es zu einem Unfall kommt. Das Lenkstörmoment entsteht aus dem aufgrund der Schräglage zur Seite des Reifenmantels hin wandernden Reifenaufstandspunkt und der im Reifenaufstandspunkt des Vorderrads wirkenden Bremskraft. Mit zunehmender Schräglage vergrößert sich der Störkrafthebelarm und damit das ungewollte, das Zweirad aufrichtende Lenkstörmoment. Breitere Reifen können den Störkrafthebelarm und das Lenkstörmoment zusätzlich vergrößern. Aus dem Dokument EP 2 130 754 ist ein Zweirad mit einer Lenkwinkel -abhängigen Lenkdämpfung bekannt.

Offenbarung der Erfindung

Der Erfindung liegt die Aufgabe zugrunde, die Beherrschbarkeit eines Zweirads bei Bremsvorgängen in Kurven zu verbessern.

Diese Aufgabe wird erfindungsgemäß mit den Merkmalen des Anspruches 1 gelöst. Die Unteransprüche geben zweckmäßige Weiterbildungen an.

Das Verfahren zur Lenkmomentreduzierung bezieht sich auf die Kurvenfahrt motorisierter Zweiräder, insbesondere Motorräder, bei einem zugleich stattfindenden Bremsvorgang am Vorderrad des Zweirads. Um die hierbei auftretenden Lenkstörmomente, welche um die Lenkachse des Zweirads wirken und bestrebt sind, das Zweirad aufzurichten, zu reduzieren und dadurch die Beherrschbarkeit des Zweirads zu verbessern, ist das Zweirad mit einem aktiven bzw. adaptiven Lenkungsdämpfer versehen, dessen Dämpfungsfunktion während der Fahrt über ein Regel- bzw. Steuergerät eingestellt werden kann. Zur Reduzierung der Lenkstörmomente wird die Dämpfung in dem adaptiven Lenkungsdämpfer als Funktion mindestens einer die Kurvenfahrt charakterisierenden Zustandsgröße erhöht, wodurch Spitzen im Lenkstörmoment vermieden und insgesamt das Niveau der Lenkstörmomente reduziert wird. Dementsprechend ist das vom Fahrer aufzubringende Lenkgegenmoment zur Kompensation der Lenkstörmomente geringer, was objektiv und subjektiv zu einer besseren Beherrschbarkeit und einem verbesserten Fahrverhalten führt. Auch ohne korrigierende Lenkbewegung durch den Fahrer ist die Gefahr reduziert, dass das Zweirad durch das Aufrichten als Folge des Lenkstörmomentes aufgrund des größeren Kurvenradius die Fahrbahn verlässt. Die Fahrsicherheit ist signifikant erhöht.

Grundsätzlich können verschiedenartige adaptive Lenkungsdämpfer eingesetzt werden. In Betracht kommen beispielsweise elektrorheologische, magnetorheologische und hydraulische adaptive Lenkungsdämpfer, deren Dämpfungsfunktion während der Fahrt einstellbar ist.

Das Verfahren zur Einstellung der Dämpfung im adaptiven Lenkungsdämpfer läuft in einem Regel- bzw. Steuergerät im Zweirad ab, wobei zweckmäßigerweise eine Sensorik im Zweirad Informationen über die aktuelle, die Kurvenfahrt charakterisierende Zustandsgröße liefert, die in dem Regel- bzw. Steuergerät verarbeitet werden. Der adaptive Lenkungsdämpfer ist mit einem Aktor versehen zur Dämpfungseinstellung, was über Signale erfolgt, die in dem Regel- bzw. Steuergerät erzeugt werden.

Zweckmäßigerweise handelt es sich bei der die Kurvenfahrt charakterisierenden Zustandsgröße um den Schräglagenwinkel, welcher die Neigung der Motoradmittelebene gegenüber einer Vertikalen bezeichnet. Zum Durchfahren der Kurve wird das Motorrad in Schräglage gebracht, wodurch der Reifenaufstandspunkt, also der effektive Mittelpunkt der Reifenaufstandsfläche, von der Mitte des Reifenmantels zur Seite hin auswandert. Der seitliche Abstand zur Reifenmitte bewirkt ein Lenkstörmoment um die Hochachse, wenn zugleich das Vorderrad abgebremst wird und eine Bremskraft im Reifenaufstandspunkt wirksam ist. Mit zunehmender Schräglage wird das Lenkstörmoment größer, ebenso vergrößert ein breiterer Reifen den Störkrafthebelarm und damit das Lenkstörmoment.

Um das Lenkstörmoment zu begrenzen, wird die Dämpfung im Lenkungsdämpfer als Funktion des Schräglagenwinkels eingestellt. Mit zunehmendem Schräglagenwinkel wird die Dämpfung erhöht, was dem Lenkstörmoment entgegenwirkt, so dass dementsprechend vom Fahrer auch nur ein geringeres Lenkgegenmoment zur Kompensation des Lenkstörmoments und zum Aufrechterhalten der gewünschten Schräglage aufgebracht werden muss.

Grundsätzlich können auch alternativ oder zusätzlich zum Schräglagenwinkel sonstige, eine Kurvenfahrt charakterisierende Zustandsgrößen für die Beurteilung, ob die Dämpfung im adaptiven Lenkungsdämpfer geändert werden soll, herangezogen werden. Es ist zum Beispiel möglich, zusätzlich oder alternativ den Lenkwinkel heranzuziehen und in die Ermittlung der aktuell einzustellenden Dämpfung im Lenkungsdämpfer einfließen zu lassen. Auch das Lenkmoment oder die Gierrate des Fahrzeuges kommen in Betracht. Darüber hinaus können gegebenenfalls auch weitere Fahrzeugzustandsgrößen, insbesondere zur Längs- und/oder Querdynamik des Fahrzeugs wie zum Beispiel die Fahrzeuggeschwindigkeit bei der Ermittlung der Dämpfung im Lenkungsdämpfer berücksichtigt werden. Die Zustandsgrößen werden entweder über eine geeignete Sensorik gemessen oder aus gemessenen Größen rechnerisch ermittelt, beispielsweise durch geeignete Fahrzeugmodelle. Des Weiteren wird über eine Sensorik das aktuell am Vorderrad wirkende Bremsmoment ermittelt, beispielsweise aus dem Bremsdruck einer hydraulischen Bremsanlage. Falls das Zweirad mit einem Antiblockiersystem (ABS) ausgestattet ist, kann auf dessen Sensorik zur Bremsdruckermittlung zurückgegriffen werden.

Bei einem verhältnismäßig langsamen Bremsdruckaufbau in der Bremsanlage des Vorderrades baut sich das Lenkstörmoment stetig auf, wohingegen es bei einem sprungartigen Bremsdruckaufbau zu Schwingungen im Verlauf des Lenkwinkels und des Lenkmoments kommen kann, da der Verbund aus Motorradrahmen, Vorderradgabel und Reifen ein schwingungsfähiges System bildet. Auch im Falle von Schwingungen im Lenkmoment bzw. Lenkwinkel ist eine Dämpfung durch Beeinflussung des adaptiven Lenkungsdämpfers möglich.

Das Zweirad kann gegebenenfalls mit einem Lenkmomentensteller ausgerüstet sein, der ein aktives Einstellen des wirksamen Lenkmomentes ermöglicht. Grundsätzlich kann auch über den Lenkmomentensteller dem Lenkstörmoment entgegengewirkt werden, wobei zur vollständigen Kompensation verhältnismäßig groß dimensionierte Lenkmomentensteller erforderlich sind. Über eine Kombination mit einem adaptiven Lenkungsdämpfer können kleiner dimensionierte Lenkmomentensteller verwendet werden, ohne Funktionseinschränkungen in Kauf nehmen zu müssen. Der adaptive Lenkungsdämpfer hat den Vorteil einer schnellen Arbeitsweise und der Dämpfung hoher Momentenspitzen, wohingegen mit dem Lenkmomentensteller zusätzliche Funktionen wie zum Beispiel eine Übersteuerverhinderungsfunktion oder eine unterstützende Servolenkung als Komfortfunktion realisiert werden können. Der Lenkmomentensteller kann unterstützend zur zumindest teilweisen Kompensation der Lenkstörmomente eingesetzt werden.

Gegebenenfalls wird ein unterer Schwellenwert für die die Kurvenfahrt charakterisierende Zustandsgröße berücksichtigt, so dass eine Dämpfungsänderung im Lenkungsdämpfer nur durchgeführt wird, wenn die Zustandsgröße den Schwellenwert überschreitet. Auch kann die Änderung der Dämpfung wieder zurückgenommen werden, wenn während der Kurvenfahrt nach einer bereits durchgeführten Dämpfungsänderung die Zustandsgröße den Schwellenwert wieder unterschreitet.

Weitere Vorteile und zweckmäßige Ausführungen sind den weiteren Ansprüchen, der Figurenbeschreibung und den Zeichnungen zu entnehmen. Es zeigen:

Fig. 1    ein Motorrad in Schräglage bei Durchfahren einer Kurve,

Fig. 2    die Kräfte und Momente am Vorderrad bei Schräglage in der Kurve und zugleich wirkender Bremskraft.

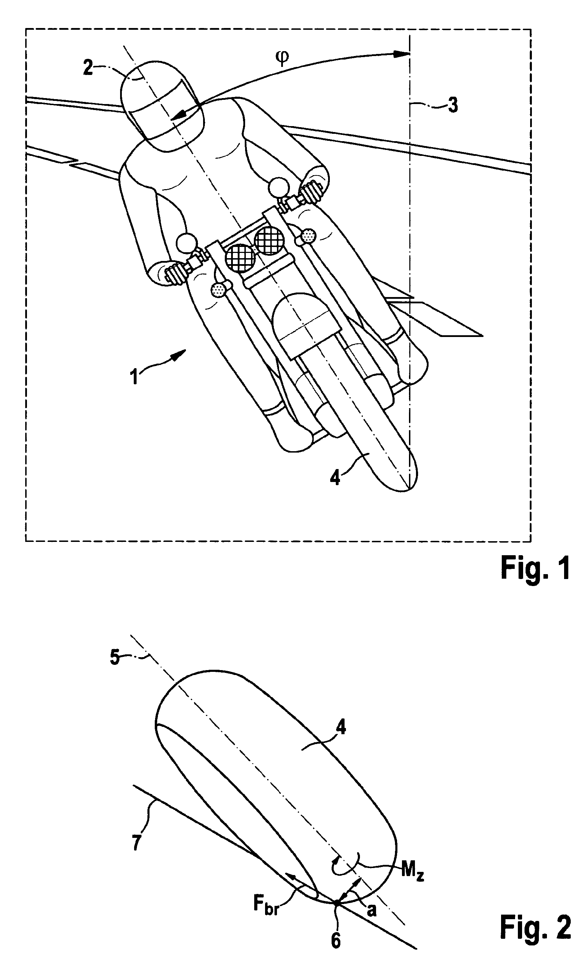

Fig. 1 zeigt ein Motorrad 1 bei Kurvenfahrt. Das Motorrad 1 befindet sich in Schräglage, der Schräglagenwinkel φ kennzeichnet die Winkellage zwischen einer Fahrzeugmittelebene 2 und einer Vertikalen 3. Bei aufrechter Position des Motorrads 1 liegt die Fahrzeugmittelebene 2 in der Vertikalen 3.

Fig. 2 zeigt das Vorderrad 4 in Einzelstellung bei Schräglage. Aufgrund der Schräglage wandert der Reifenaufstandspunkt 6 des Reifens 4 auf der Fahrbahn 7 von der Reifenmitte, durch die die Lenkachse 5 verläuft, zur Reifenseite. Der Reifenaufstandspunkt 6 weist zur Reifenmitte den Abstand a auf, der den Störkrafthebelarm bildet. Wird das Vorderrad 4 abgebremst, wirkt im Reifenaufstandspunkt 6 die Bremskraft $F_{br}$, die gemeinsam mit dem Störkrafthebelarm a zu einem Lenkstörmoment $M_z$ die Hoch- bzw. Lenkachse führt, wobei das Lenkstörmoment bestrebt ist, das Motorrad aufzurichten. Das Lenkstörmoment $M_z$ kann gemäß Beziehung

$$M_z = s(\varphi) \cdot F_{br}$$

aus einer vom Schräglagenwinkel φ abhängigen Funktion s und der Bremskraft $F_{br}$ ermittelt werden. Die Bremskraft $F_{br}$ kann beispielsweise in erster Näherung linear als Funktion des hydraulischen Bremsdrucks in der Bremsanlage am Vorderrad bestimmt werden, wobei der Bremsdruck beispielsweise in einem Antiblockiersystem ABS gemessen wird. Der Schräglagenwinkel φ kann mittels einer geeigneten Sensorik bestimmt werden.

Um die Beherrschbarkeit des Motorrads bei einem Bremsvorgang während einer Kurvenfahrt zu verbessern und die Sicherheit zu erhöhen, wird die Dämpfung in einem aktiv einstellbaren, adaptiven Lenkungsdämpfer erhöht, der im Motorrad verbaut ist. Die Ansteuerung des Lenkungsdämpfers LDA erfolgt als Funktion des Lenkstörmoments $M_z$ und der Zeit t gemäß

$$LDA = f(M_z, t)$$

Durch die Erhöhung der Lenkungsdämpfung ist nur ein geringeres Lenkstörmoment wirksam, so dass entsprechend auch nur geringere Lenkgegenmomente vom Fahrer zur Kompensation aufgebracht werden müssen. Da aufgrund des Bremsvorgangs die Geschwindigkeit des Motorrads verringert wird, nimmt auch der Schräglagenwinkel φ ab, was zu einer Reduzierung des Lenkstörmoments $M_z$ führt. Die Ansteuerung des adaptiven Lenkungsdämpfers wird daher vorteilhafterweise bereits nach kurzer Zeit wieder reduziert. Somit ist sichergestellt, dass die Lenkung schnell wieder leichtgängig ist und Nachteile bezüglich Schwingungen und Fahrzeugbeherrschbarkeit vermieden werden.

Zweckmäßigerweise wird die Änderung der Lenkungsdämpfung, insbesondere eine Erhöhung nach Ablauf einer definierten Zeitspanne wieder zurückgenommen oder zumindest reduziert, um sicherzustellen, dass die Lenkung schnell wieder leichtgängig wird und Nachteile bezüglich Schwingungen und Fahrzeugbeherrschbarkeit vermieden werden.

Gegebenenfalls werden bei der Einstellung der Lenkungsdämpfung zusätzliche Zustandsgrößen berücksichtigt, die aus einer im Motorrad mitgeführten Sensorik ermittelt werden, beispielsweise der Lenkwinkel, das Lenkmoment, die Gierrate und/oder die Fahrzeuggeschwindigkeit. Die Verarbeitung der sensorisch ermittelten Daten erfolgt in einem Regel- bzw. Steuergerät, in welchem Sensorsignale zur Einstellung des adaptiven Lenkungsdämpfers erzeugt werden.

**Patentansprüche**

1. Verfahren zur Lenkmomentreduzierung bei Kurvenfahrten eines Zweirads, wobei für den Fall, dass während einer Kurvenfahrt ein Bremsmoment am Vorderrad (4) ermittelt wird, die Dämpfung in einem adaptiven Lenkungsdämpfer als Funktion mindestens einer die Kurvenfahrt charakterisierenden Zustandsgröße erhöht wird.

2. Verfahren nach Anspruch 1, **dadurch gekennzeichnet, dass** die die Kurvenfahrt charakterisierende Zustandsgröße der Schräglagenwinkel (φ) des Zweirads ist, wobei mit zunehmendem Schräglagenwinkel (φ) die Dämpfung im Lenkungsdämpfer erhöht wird.

3. Verfahren nach Anspruch 1 oder 2, **dadurch gekennzeichnet, dass** die Dämpfung im Lenkungsdämpfer mit zunehmendem Bremsmoment am Vorderrad (4) erhöht wird.

4. Verfahren nach einem der Ansprüche 1 bis 3, **dadurch gekennzeichnet, dass** als die Kurvenfahrt charakterisierende Zustandsgröße der Lenkwinkel, das Lenkmoment, die Gierrate und/oder die Fahrzeuggeschwindigkeit berücksichtigt wird.

5. Verfahren nach einem der Ansprüche 1 bis 4, **dadurch gekennzeichnet, dass** die Änderung der Dämpfung im Lenkungsdämpfer nach Ablauf einer definierten Zeitspanne zurückgenommen wird.

6. Verfahren nach einem der Ansprüche 1 bis 5, **dadurch gekennzeichnet, dass** die Änderung der Dämpfung im Lenkungsdämpfer nur durchgeführt wird, wenn die die Kurvenfahrt charakterisierende Zustandsgröße einen Schwellenwert überschreitet.

7. Verfahren nach einem der Ansprüche 1 bis 6, **dadurch gekennzeichnet, dass** die Änderung der Dämpfung im Lenkungsdämpfer zurückgenommen wird, wenn die die Kurvenfahrt charakterisierende Zustandsgröße einen Schwellenwert unterschreitet.

8. Regel- bzw. Steuergerät zur Durchführung des Verfahrens nach einem der Ansprüche 1 bis 7.

9. Zweirad mit einem Regel- bzw. Steuergerät nach Anspruch 8, mit einem adaptiven Lenkungsdämpfer und einer Sensorik zur Ermittlung mindestens einer die Kurvenfahrt charakterisierenden Zustandsgröße sowie zur Ermittlung des am Vorderrad (4) wirkenden Bremsmoments.

10. Zweirad nach Anspruch 9, mit einer Sensorik zur Ermittlung des Schräglagenwinkels (φ).

11. Zweirad nach Anspruch 9 oder 10, mit einer Sensorik zur Ermittlung des Lenkwinkels, des Lenkmoments, der Gierrate und/oder der Fahrzeuggeschwindigkeit.

12. Zweirad nach einem der Ansprüche 9 bis 11, mit einem Antiblockiersystem (ABS).

13. Zweirad nach einem der Ansprüche 9 bis 12, mit einem Lenkmomentensteller zum aktiven Einstellen des Lenkmoments.

**Claims**

1. Method for reducing the steering torque of a two-wheeled vehicle during cornering, wherein if a braking torque is determined at the front wheel (4) during cornering the damping is increased in an adaptive steering damper as a function of at least one state variable which characterizes the cornering.

2. Method according to Claim 1, **characterized in that** the state variable which characterizes the cornering is the leaning angle (φ) of the two-wheeled vehicle, wherein as the leaning angle (φ) becomes larger the damping in the steering damper is increased.

3. Method according to Claim 1 or 2, **characterized in that** the damping in the steering damper is increased as the braking torque at the front wheel (4) becomes larger.

4. Method according to one of Claims 1 to 3, **characterized in that** the steering angle, the steering torque, the yaw rate and/or the vehicle speed are/is taken into account as the state variable which characterizes the cornering.

5. Method according to one of Claims 1 to 4, **characterized in that** the change in the damping in the steering damper is reversed after a defined time period has expired.

6. Method according to one of Claims 1 to 5, **charac-**

**terized in that** the change in the damping in the steering damper is carried out only if the state variable which characterizes the cornering exceeds a threshold value.

7. Method according to one of Claims 1 to 6, **characterized in that** the change in the damping in the steering damper is reversed if the state variable which characterizes the cornering undershoots a threshold value.

8. Closed-loop or open-loop control unit for carrying out the method according to one of Claims 1 to 7.

9. Two-wheeled vehicle having a closed-loop or open-loop control unit according to Claim 8, having an adaptive steering damper and a sensor system for determining at least one state variable which characterizes the cornering, and for determining the braking torque which acts on the front wheel (4).

10. Two-wheeled vehicle according to Claim 9, having a sensor system for determining the leaning angle ($\varphi$).

11. Two-wheeled vehicle according to Claim 9 or 10, having a sensor system for determining the steering angle, the steering torque, the yaw rate and/or vehicle speed.

12. Two-wheeled vehicle according to one of Claims 9 to 11, having an anti-lock brake system (ABS).

13. Two-wheeled vehicle according to one of Claims 9 to 12, having a steering torque adjustor for actively adjusting the steering torque.

**Revendications**

1. Procédé de réduction du couple de direction lors des trajectoires en virage d'un deux-roues, selon lequel, dans le cas où un moment de freinage est déterminé au niveau de la roue avant (4) pendant une trajectoire en virage, l'amortissement dans un amortisseur de direction adaptatif est augmenté en fonction d'au moins une grandeur d'état qui caractérise la trajectoire en virage.

2. Procédé selon la revendication 1, **caractérisé en ce que** la grandeur d'état qui caractérise la trajectoire en virage est l'angle d'inclinaison ($\varphi$) du deux-roues, l'amortissement dans l'amortisseur de direction étant accru à mesure que l'angle d'inclinaison ($\varphi$) augmente.

3. Procédé selon la revendication 1 ou 2; **caractérisé en ce que** l'amortissement dans l'amortisseur de direction est accru à mesure que le moment de freinage au niveau de la roue avant (4) augmente.

4. Procédé selon l'une des revendications 1 à 3, **caractérisé en ce que** la grandeur d'état qui caractérise la trajectoire en virage qui est prise en compte est l'angle de direction, le couple de direction, le taux de lacet et/ou la vitesse du véhicule.

5. Procédé selon l'une des revendications 1 à 4, **caractérisé en ce que** la modification de l'amortissement dans l'amortisseur de direction est retirée après écoulement d'un intervalle de temps donné.

6. Procédé selon l'une des revendications 1 à 5, **caractérisé en ce que** la modification de l'amortissement dans l'amortisseur de direction est seulement effectuée lorsque la grandeur d'état qui caractérise la trajectoire en virage dépasse une valeur de seuil.

7. Procédé selon l'une des revendications 1 à 6, **caractérisé en ce que** la modification de l'amortissement dans l'amortisseur de direction est effectuée lorsque la grandeur d'état qui caractérise la trajectoire en virage devient inférieure à une valeur de seuil.

8. Régulateur ou contrôleur destiné à mettre en oeuvre le procédé selon l'une des revendications 1 à 7.

9. Deux-roues équipé d'un régulateur ou contrôleur selon la revendication 8, comprenant un amortisseur de direction adaptatif et un système de détection destiné à déterminer au moins une grandeur d'état qui caractérise la trajectoire en virage ainsi qu'à déterminer un moment de freinage agissant au niveau de la roue avant (4).

10. Deux-roues selon la revendication 9, comprenant un système de détection destiné à déterminer l'angle d'inclinaison ($\varphi$).

11. Deux-roues selon la revendication 9 ou 10, comprenant un système de détection destiné à déterminer l'angle de direction, le couple de direction, le taux de lacet et/ou la vitesse du véhicule.

12. Deux-roues selon l'une des revendications 9 à 11, équipé d'un système antiblocage (ABS).

13. Deux-roues selon l'une des revendications 9 à 12, équipé d'un organe de réglage du couple de direction destiné au réglage actif du couple de direction.

**Fig. 1**

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2130754 A